# EUROPÄISCHE PATENTSCHRIFT

(11) **EP 0 764 856 B1**
(45) Veröffentlichungstag und Bekanntmachung des Hinweises auf die Patenterteilung: **05.12.2001**
(21) Anmeldenummer: 96114250.2
(22) Anmeldetag: 05.09.1996
(51) Int. Cl.: G01V 3/10, G01V 3/15

(54) **Sonde für ein Metallsuchgerät**
Sensor for a metal detector
Capteur pour un détecteur de métal

(30) Priorität: 21.09.1995 DE 29515164 U
(43) Veröffentlichungstag der Anmeldung: 26.03.1997
(73) Patentinhaber: FIRMA ING. KLAUS EBINGER, D-51149 Köln (DE)
(72) Erfinder: Günnewig,Augustinus, 50733 Köln (DE); Buscher,Andre, 51149 Köln (DE); Ebinger,Klaus, 51143 Köln (DE)
(74) Vertreter: Heim, Hans-Karl, Dipl.-Ing.

(56) Entgegenhaltungen:
- EP-A- 0 249 110
- EP-A- 0 305 591
- EP-A- 0 654 685
- DE-A- 4 423 661
- DE-U- 9 300 788
- FR-A- 960 966
- US-A- 4 912 414
- LIMANN O.: "metallsuchgerät aus dem baukasten" FUNKSCHAU 1 FEBRUARY, WEST GERMANY 1970, Bd. 42, Nr. 3, Seiten 77-79, XP002080848

## Beschreibung

Die Erfindung betrifft eine Sonde für ein Metallsuchgerät mit einem ringförmigen Sondenkörper, welcher Verbindungsstege längs seiner Mittel- und Querachse aufweist und welcher etwa gleichseitig mit parallelen Seitenbereichen zur Mittel- und Querachse aufgebaut ist, mit einer in den Seitenbereichen des ringförmigen Sondenkörpers angeordneten außenliegenden Spule als Hauptspule, welche mindestens eine innenliegende Spule flächenmäßig umschließt, wobei mindestens eine der Spulen als Sende- und mindestens eine weitere Spule als Empfangsspule geschaltet ist.

Eine gattungsähnliche Sonde ist aus der DE 36 19 308 C2 bekannt. In dieser Sonde wird eine kreisförmige Sendespule verwendet, in deren Innenraum verschiedenartig ausgeformte Empfangsspulen angeordnet sein können. Eine solche Sonde ist leicht und hat vor allem bei der Unterwassersuche nur einen geringen Bewegungswiderstand. Der Ortungsreichweite sowie der Eliminierung von Störsignalen sind bei dieser bekannten Sonde jedoch Grenzen gesetzt. Die Empfangsqualität der Sonde könnte daher noch verbessert werden.

In der EP 0 607 605 A1 ist daher bereits eine Sonde vorgeschlagen worden, deren Ringkörper im wesentlichen als Ovalring ausgebildet ist, wodurch vor allem entlang der Längsachse zwei Nebenspulen in dem Ovalring angeordnet werden können, deren Zentren voneinander einen relativ großen Abstand aufweisen und dadurch eine erhöhte Differenzwirkung erreichen.

Eine weitere Sonde mit Verbindungsstegen längs ihrer Mittel- und Querachse ist aus der EP 0 654 685 A2 bekannt. Dabei werden zwei im wesentlichen nebeneinander angeordnete ovale Sende- und Empfangsspulen verwendet, die sich teilweise überlagern. Diese Überlagerung zur Reduzierung des Wechselinduktionskoeffizienten führt jedoch zu einem extrem breiten Mittelsteg, aus dem Gewichtsnachteile resultieren.

Eine gattungsgemäße Sonde ist in der US 4,912,414 beschrieben, wobei dort vier innenliegende Spulen nichtüberlappend angeordnet sind. Weiterhin ist die außenliegende Hauptspule beabstandet von den innenliegenden Spulen angeordnet, wodurch wertvolle Detektionsfläche verschenkt wird und somit die Empfindlichkeit der Vorrichtung beeinträchtigt wird.

Der Erfindung liegt die **Aufgabe** zugrunde, eine Sonde der eingangs genannten Art zu schaffen, mit der bei leichter Handhabung und Eignung für vielseitige spezifische Einsatzgebiete eine hohe Detektionsempfindlichkeit erreicht wird.

Die Lösung dieser Aufgabe erfolgt gemäß den kennzeichnenden Merkmalen des Anspruchs 1. Vorteilhafte Weiterbildungen sind in den Unteransprüchen beschrieben.

Eine Sonde der oben beschriebenen Art ist erfindungegemäß dadurch weitergebildet, dass eine Kompensationswicklung für die mindestens eine Empfangsspule zur Kompensation eines von der Sendespule erzeugten elektromagnetischen Feldes vorhanden ist, dass die außenliegende Spule sowohl als Sende- als auch als Empfangsspule schaltbar ist, dass jede der innenliegenden Spulen wenigstens teilweise in den Seitenbereichen des ringförmigen Sondenkörpers angeordnet ist und dass die innenliegenden Spulen gemeinsam im Wesentlichen die gesamte Sondenfläche überdecken.

Ein wesentlicher Grundgedanke der Erfindung kann darin gesehen werden, dass im Wesentlichen die gesamte Sondenfläche als Detektionsfläche genutzt wird und dass die innenliegenden Spulen zumindest teilweise in den Seitenbereichen des ringförmigen Sondenkörpers angeordnet sind. Dadurch kann eine sehr gute Empfindlichkeit und außerdem ein konstruktiv einfacher Aufbau der Sonde erzielt werden.

Durch die Kompensationswicklung wird eine Entkopplung zwischen der Senderseite und der Empfängerseite geschaffen, so daß das senderseitig erzeugte elektromagnetische Feld aufgrund der Kompensation nicht zu einer Störung des vom zu detektierenden Objekt beeinflußten Sekundärfeldes führt.

Da die im Sondenkörper als Sende- und Empfangsspulen eingebrachten Spulen bzw. Schleifen abhängig von der jeweils vorliegenden Detektionsaufgabe auch in ihrer Funktion umkehrbar sind, so daß die Senderspule auch als Empfangsspule betrieben werden kann und umgekehrt, ist daher eine Kompensationsanordnung zweckmäßig, bei der die entsprechende Einschleifung der Kompensationswicklungen sowohl von der Sender- als auch von der Empfängerseite her erfolgen kann.

Die Kompensationsanordnung wird daher so gestaltet, daß abhängig vom Einsatzzweck und der entsprechenden Schaltung der einzelnen Spulen die Empfangsspule (n) mit einer entgegengesetzt gleichen Kompensationsspannung beaufschlagt werden, wie sie durch die Senderspule erzeugt wird, damit eine Entkopplung zwischen Sender- bzw. Primärseite und Empfänger- bzw. Sekundär- oder Meßseite erfolgt.

In einer bevorzugten Ausführungsform weist die Sonde zwei große D-förmige Nebenspulen auf. Hierbei können diesen beiden D-förmigen Nebenspulen als Sende- und Empfangsspule fungieren oder von einer diese beiden Spulen umgebenden Außenspule, die insbesondere als Sendespule verwendet wird, umschlossen sein.
Das Umgeben bedeutet hierbei auch, daß die Randbereiche von Außenspule und D-förmigen Spulen auch weitgehend dekkungsgleich angeordnet sein können.

Geeigneterweise wird bei einer derartigen, vorausgehend genannten Anordnung, die große Außenspule als Sendespule geschaltet und eine oder beide innenliegende D-förmige Spulen als Empfangsspulen, die insbesondere im Hinblick auf eine Differenzmessung geeignet sind.
Die Kompensationsanordnung für beide innenliegende D-förmigen Spulen ist dabei zweckmäßigerweise bezogen auf eine Empfangsspule mit entgegengesetzter Wicklungs- bzw. Schleifenanzahl ausgestattet, die von der Sendespule ausgehend eingeschleift ist.
Die Kompensationswicklung kann mit entsprechender Wicklungszahl einseitig oder auch beidseitig verteilt zur Empfängerspule angeordnet sein.
Alternativ besteht auch die Möglichkeit, die jeweilige D-förmige Empfängerspule mit einer entgegengesetzt durchflossenen Kompensationswicklung auszustatten, so daß eine Entkopplung zum Sender- bzw. Primärfeld erreicht wird.

Bei einem Betrieb zweier D-förmiger Spulen ohne Außenspule, so daß eine D-förmige Spule als Sendespule und die andere D-förmige Spule als Emfängerspule fungiert, ist es zur Entkopplung erforderlich, von der Senderseite ausgehend zur entsprechenden Empfängerseite eine entgegengesetzt gerichtete Kompensationswicklung einzuschleifen.

Eine weitere günstige Schleifenkonfiguration kann mit vier großen, etwa D-förmigen Nebenspulen erreicht werden, von denen jeweils zwei symmetrisch zueinander angeordnet sind und die weiteren um 90 Grad gedreht liegenden Spulen mindestens partiell überlappen. Werden diese vier D-förmigen Spulen von einer Außenspule als Sendespule umgeben, so kann ein entkoppelter Zustand dadurch erreicht werden, daß die vier Empfangsspulen zur Kompensation des senderseitigen Signals gegeneinander geschaltet werden, so daß sich darin induzierte Einzelspannungen aufgrund des symmetrischen Aufbaus eliminieren.
Bei der letztgenannten Konfiguration besteht auch die Möglichkeit, diese ohne außenliegende Sendespule zu betreiben. In diesem Fall fungiert ein Paar der D-förmigen Spulen als Sender und das weitere Paar als Empfangsspulen.

In einer zweckmäßigen Ausgestaltung weist die Sonde eine innenliegende etwa 8-förmige Empfangsspule auf, die im mittleren Bereich überkreuzende Wicklungen hat. Der Überkreuzungsbereich liegt vorteilhafterweise in einem der Stege, insbesondere im Kreuzungsbereich der Stege. Hierdurch ist durch die entgegengesetzte Wicklungsrichtung der jeweils anderen Spulenhälfte der 8-förmigen Spule die gewünschte Kompensation zum senderseitigen Feld erreicht.

Auch die diagonale Anordnung einer 8-förmigen Spule mit Überkreuzungsbereich der Wicklungen oder die Anordnung zweier diagonal vorgesehener 8-förmiger Spulen, die etwa die Struktur eines Kleeblattes aufweisen, ist für bestimmte Einsatzzwecke empfehlenswert.

Weiterhin besteht die vorteilhafte Möglichkeit, im Mittelsteg, der zu diesem Zweck auch etwas verbreitert werden kann, die gesamte Elektronik für das Suchgerät unterzubringen. Dabei ist jedoch darauf zu achten, daß die Elektronik gewichtsmäßig gleichmäßig um den Mittelpunkt verteilt wird. Dies ist besonders deshalb vorteilhaft, da im Mittelpunkt der Gelenkbock für die Halterung der Trageinrichtung vorgesehen ist. Die Sonde ist bevorzugt lösbar an der Trageinrichtung befestigt, so daß die Sonde an der Trageinrichtung gedreht werden kann und dann in der gewünschten Stellung wieder arretierbar ist. Durch die erfindungsgemäße Geometrie der Sonde besteht eine 90 Grad-Rotationssymmetrie. Bei einer Drehung um 45 Grad ist jedoch anstelle einer Breitseite eine Ecke in Suchrichtung vorne angeordnet, wodurch sich eine geänderte Anordnung der Nebenspulen und auch eine größere Suchbreite ergibt.

Insgesamt gesehen, weist die erfindungsgemäße Sondengeometrie vier gleich lange und linear ausgebildete Seitenbereiche auf, wobei die gegenüberliegenden Seiten des Körpers parallel zueinander sind und Längs- und Quersteg gleich lang sind, senkrecht zueinander ausgebildet sind und jeweils die Mittelpunkte der Seitenbereiche treffen. Gegenüber einer kreisförmigen Sonde mit gleichem Durchmesser, also mit gleichen Einschränkungen in der Beweglichkeit und bei der Durchführung durch Hindernisse, ist bei dieser abgerundeten Quadratform eine größere Sondenfläche vorhanden, mit deren Hilfe eine höhere Empfindlichkeit erzielt wird.

Die Sonde kann sowohl zur Relativ- als auch zur Differenzmessung ausgelegt sein, wobei günstigerweise ein Pulsinduktionsverfahren verwendet wird. Zur besseren Auswertung der empfangenen Signale ist es auch möglich, diese abzutasten. Jedes Signal wird dann durch eine Weiterverarbeitung der Vielzahl von aufgenommenen Abtastwerten auf rechnerischem Wege detailliert ausgewertet. Durch die Entkopplung der Spulen mit Hilfe von Kompensationswicklungen ist es möglich, eine hohe Detektionsempfindlichkeit empfängerseitig zu erreichen.

Nachfolgend werden bevorzugte Ausführungsformen der Erfindung anhand einer Zeichnung weiter erläutert. Im einzelnen zeigen die schematischen Darstellungen in:
- Fig. 1: eine Draufsicht auf die Sonde;
- Fig. 2: eine Seitenansicht der Sonde;
- Fig. 3: eine Schleifenkonfiguration zur Verwendung in der Sonde;
- Fig. 4: eine zweite Schleifenkonfiguration zur Verwendung in der Sonde;
- Fig. 5: eine dritte Schleifenkonfiguration zur Verwendung in der Sonde und
- Fig. 6: eine vierte Schleifenkonfiguration zur Verwendung in der Sonde.

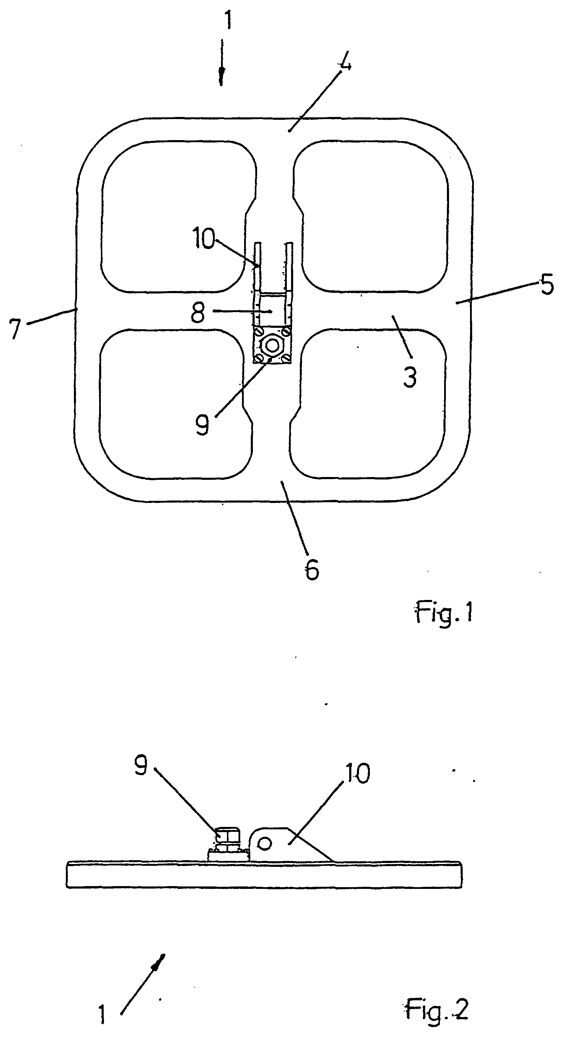

In Fig. 1 ist eine Sonde 1 mit einem Längssteg 2 und einem Quersteg 3 dargestellt, deren äußere Seitenbereiche 4, 5, 6 und 7 linear ausgebildet sind und gleich lang sind. Die gegenüberliegenden Seiten 4 und 6 und 5 und 7 sind jeweils parallel zueinander. Längssteg 2 und Quersteg 3 sind gleich lang und stehen senkrecht aufeinander und treffen sich im Zentrum 8 der Sonde. In dem Zentrum 8 ist sowohl die Anschlußplatte 9 als auch der Gelenkbock 10 vorgesehen. Insbesondere der Gelenkbock 10 ist sowohl geometrisch als auch gewichtsmäßig zentral angeordnet und dient zur Aufnahme einer Trageinrichtung. Bei der normalen Ausrichtung ist der Seitenbereich 5 in Suchrichtung vorne, wobei jedoch durch den drehbaren Anschluß der Halteeinrichtung an den Gelenkbock 10 die Sonde 1 so verdreht werden kann, daß eine der abgerundeten Ecken in Suchrichtung vorne ist. Dadurch ergibt sich eine andere Anordnung der Schleifenkonfigurationen und eine von der Diagonallänge der Quadratform bestimmte Suchbreite. In dem verbreiterten Längssteg 2 kann die gesamte Suchelektronik angeordnet werden. Ebenso kann der Längssteg 2 auch genauso gleichmäßig durchgehend wie der Quersteg 3 ausgebildet werden, also ohne die dargestellte Verbreiterung, und trotzdem alleine oder zusammen mit dem Quersteg zur Aufnahme der Suchelektronik dienen.

In Fig. 2 ist eine Seitenansicht der Sonde 1 dargestellt, in der die Anschlußplatte 9 und der Gelenkbock 10 besonders deutlich zu sehen sind. Insbesondere ist das Loch zur Aufnahme der Trageinrichtung in dem Gelenkbock 10 deutlich zu erkennen. Die Anschlußplatte 9 dient zur Weitergabe der elektronisch gewonnenen Informationen an eine dem Benutzer zugängliche Anzeigeeinrichtung.

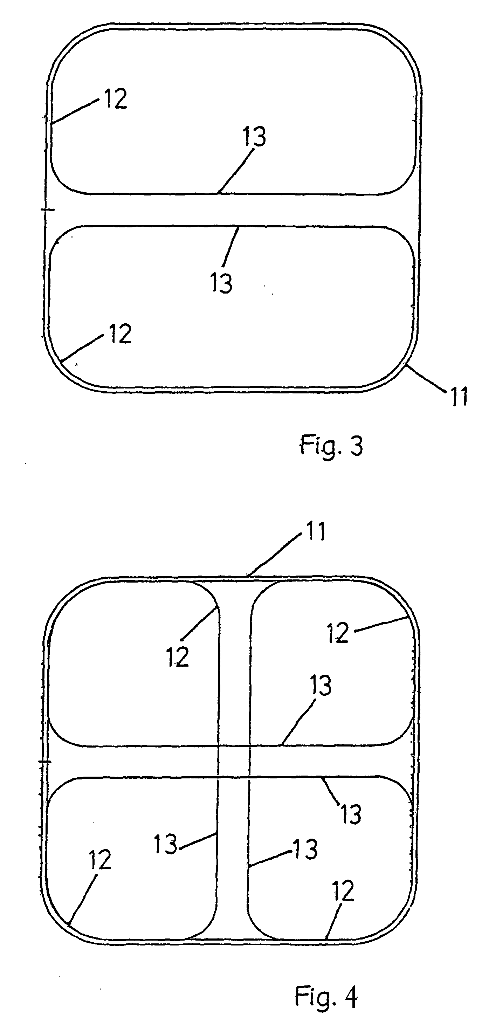

Eine erste mögliche Schleifenkonfiguration ist in Fig. 3 dargestellt. Die in den Figuren 1 und 2 dargestellte Sonde kann durch ihre universelle Ausbildung eine Vielzahl von verschiedenen Schleifenkonfigurationen aufnehmen, von denen einige im folgenden beschrieben werden. Erfindungsgemäß ist eine außen umlaufende Sendeschleife 11 vorgesehen. In der hier dargestellten Schleifenkonfiguration sind neben der umlaufenden Sendespule 11 zwei große D-förmige Schleifen 12 vorgesehen, die ebenfalls entlang der linearen und zueinander senkrechten bzw. parallelen Seitenstücke geführt sind und dadurch besonders groß ausgebildet sind. Durch diese besonders groß ausgebildeten Empfangsschleifen wird eine besonders hohe Empfindlichkeit erreicht. Die Kompensationsanordnung wird zweckmäßigerweise bei der Schleifenkonfiguration nach Figur 3 so angeordnet, daß von der Sendespule eine Kompensationswicklung mit gleicher Windungszahl wie die Empfangsspule über die jeweilige Empfangsspule gegenläufig eingeschleift wird. Bei der Verwendung der beiden D-förmigen Spulen 12 als Empfangsspulen ist daher ein Teil der Wicklungen der Sendespule auf die beiden Empfangsspulen gegenläufig verteilt. Die Kompensationswicklungen müssen daher ent- engesetzt gleich zur Empfängerwicklung sein, so daß die senderseitig erzeugte Spannung vollständig unterdrückt wird.
Wird die Ausführungsform nach Fig. 3 ohne außenliegende Spule 11 betrieben, so daß eine D-förmige Spule als Sender und die andere Spule als Empfänger fungiert, so sind beide Spulen elektrisch ebenfalls zu entkoppeln, was durch eine von der Sendeseite ausgehende, auf die Empfängerseite eingeschleifte Kompensationswicklung realisiert wird.

Eine weitere Ausführungsform mit einer umlaufenden Sendeschleife 11 und insgesamt vier großen D-förmigen Nebenspulen ist in Fig. 4 dargestellt.

Erfindungsgemäß wird diese Anordnung mit umlaufender Sendespule betrieben werden und es wird ein entkoppelter Zustand erreicht. Hierzu werden die vier Empfangsspulen 12 so gegeneinander geschaltet, daß sich wegen des symmetrischen Aufbaus die Einzelspannung der Spulen kompensieren.
Bei einem Betrieb ohne die außenliegende Sendespule 11 werden jeweils zwei Spulen als Sender und als Empfänger geschaltet. Im Hinblick auf die Kompensation kann das Senderfeld auch gegenläufig gestaltet werden oder die Empfängerwicklungen auch gegeneinander geschaltet werden, wodurch empfängerseitig wieder die gewünschte Kompensation bzw. Spannungsminierung des Primärfeldes erreicht wird.

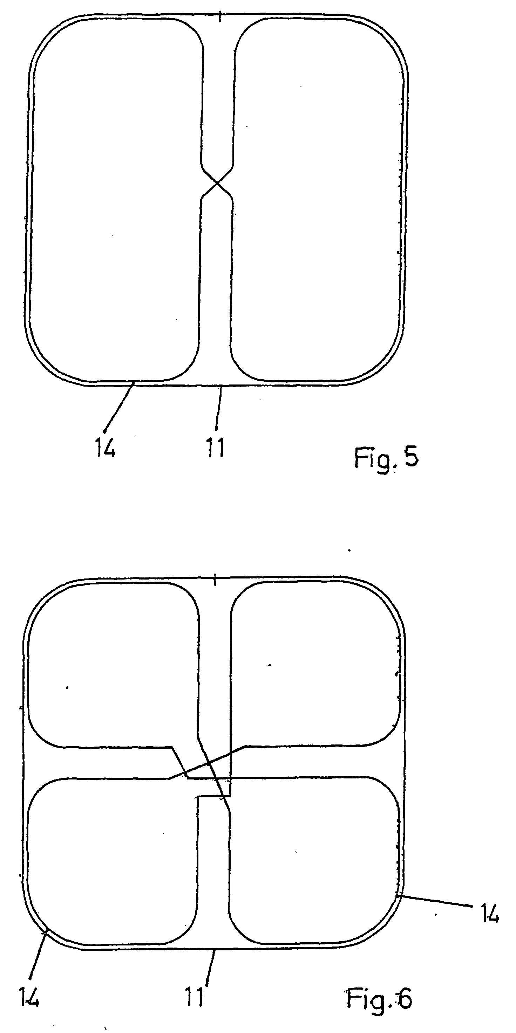

Eine kompensierte, achtförmige Schleife 14 ist in Fig. 5 dargestellt. Diese kann als Sende- und Empfangsschleife verwendet werden. Weiterhin können auch zwei achtförmige Schleifen verwendet werden, die entweder doppelt gelegt werden, oder bei denen die zweite achtförmige Schleife unabhängig zu der ersten und senkrecht zu dieser in die Schleifenanordnung mit hineingelegt werden kann. Dieser Fall ist vergleichbar mit den vier eingelegten großen D-Spulen der Fig. 4.

Eine weitere Variante ist in Fig. 6 dargestellt, in der zwei achtförmige Schleifen 14 diagonal zu den Längsstegen angeordnet werden und dadurch auf beide Seiten verteilt werden. Bei der Verwendung dieser relativ kleinen Spulen reduziert sich zwar die Ortungsreichweite, jedoch nimmt die Kleinteileempfindlichkeit zu.

Die hier dargestellten quadratförmigen Sonden haben Abmessungen von circa 280 x 280 mm. Allerdings ist die Anwendung der hier beschriebenen Technik auch bei wesentlich größeren Sonden mit den gleichen Vorteilen verbunden und genauso gut möglich.

## Patentansprüche

1. Sonde für ein Metallsuchgerät mit
einem ringförmigen Sondenkörper, welcher Verbindungsstege (2, 3) längs seiner Mittel- und Querachse aufweist, und welcher etwa gleichseitig mit parallelen Seitenbereichen (4, 5, 6, 7) zur Mittel- und Querachse aufgebaut ist,
mit einer in den Seitenbereichen (4, 5, 6, 7) des ringförmigen Sondenkörpers (1) angeordneten außenliegenden Spule (11) als Hauptspule, welche mindestens eine innenliegende Spule (12, 13, 14) flächenmäßig umschließt, wobei mindestens eine der Spulen als Sende- und mindestens eine weitere Spule als Empfangsspule geschaltet ist,
**dadurch gekennzeichnet,**
- **dass** eine Kompensationswicklung für die mindestens eine Empfangsspule zur Kompensation eines von der Sendespule erzeugten elektromagnetischen Feldes vorhanden ist,
- **dass** die außenliegende Spule sowohl als Sende- als auch als Empfangsspule schaltbar ist,
- **dass** jede der innenliegenden Spulen (12, 13, 14) wenigstens teilweisa in den Seitenbereichen (4, 5, 6, 7) des ringförmigen Sondenkörpers (1) angeordnet ist und
- **dass** die innenliegenden Spulen (12, 13, 14) gemeinsam im Wesentlichen die gesamte Sondenfläche überdecken.

2. Sonde nach Anspruch 1,
**dadurch gekennzeichnet,**
**daß** mindestens zwei D-förmige Spulen (12) vorhanden sind, die zusammen im wesentlichen die gesamte Fläche der Sonde (1) überdecken und deren benachbarte Spulenbereiche (13) in einem Verbindungssteg (3) angeordnet sind und
**daß** eine D-förmige Spule (12) als Sende- und die andere D-förmige Spule als Empfangsspule, insbesondere wechselweise, geschaltet ist.

3. Sonde nach Anspruch 1 oder 2,
**dadurch gekennzeichnet,**
**daß** die innenliegenden Spulen D-förmige, 8-förmige oder näherungsweise kreisförmige Struktur aufweisen.

4. Sonde nach einem der Ansprüche 1 bis 3,
**dadurch gekennzeichnet,**
**daß** vier einander überlappende D-förmige Spulen vorhanden sind, die jeweils etwa die halbe Sondenfläche überdecken.

5. Sonde nach Anspruch 3,
**dadurch gekennzeichnet,**
**daß** mindestens eine 8-förmige Spule (14) symmetrisch zur Mittel- oder Querachse mit einer Spulenüberkreuzung, insbesondere in einem Verbindungssteg (3), vorhanden ist oder daß eine oder zwei 8-förmige Spulen in sich gekreuzt etwa diagonal angeordnet vorhanden sind.

6. Sonde nach einem der Ansprüche 1 bis 5,
**dadurch gekennzeichnet,**
**daß** die Kompensationswicklung so ausgelegt ist, daß ein notwendiger Betrag des senderseitigen Magnetfeldes entgegengesetzt gleich auf die Empfangsspulen wirkt und
**daß** die kompensationswicklung eine gleiche, entgegengesetzt durchflossene Wicklungsanzahl wie die entsprechende Empfangsspule aufweist und dass die kompensationswicklung einseitig oder geteilt beidseitig weitgehend deckungsgleich zur jeweiligen Empfangsspule angeordnet ist.

7. Sonde nach einem der Ansprüche 1 bis 6,
**dadurch gekennzeichnet,**
**daß** die kompensationswicklung als in Serie zur Sendespule angeordnete, und zur jeweiligen Empfangsspule eingeschleifte Spuleneinrichtung ausgebildet ist.

8. Sonde nach einem der Ansprüche 1 bis 7,
**dadurch gekennzeichnet,**
**daß** die Außenspule als Empfangsspule und eine oder mehrere innere Spulen als Sendespulen geschaltet sind und daß die Sonde quadratförmig ausgebildet ist.

9. Sonde nach einem der Ansprüche 1 bis 8,
**dadurch gekennzeichnet,**
**daß** die zum Betrieb der Sonde benötigte Elektronik vom Längssteg (2) und/oder vom Quersteg (3) aufgenommen ist,
**daß** der Steg zur Aufnahme der Elektronik verbreitert ist, und
**daß** die Verbreiterung zur Aufnahme der Elektronik insbesondere im mittleren Bereich und etwa parallel verlaufend zu den Außenseiten mit einem Verjüngungsübergang zur normalen Breite des Steges ausgebildet ist.

10. Sonde nach einem der Ansprüche 1 bis 9,
**dadurch gekennzeichnet,**
**daß** eine zentral angeordnete Aufhängeeinrichtung zur drehbaren Halterung einer Trageeinrichtung vorhanden ist.

## Claims

1. Sensor for a metal detector having an annular sensor body, which has connecting webs (2, 3) along its centre and transverse axis and which is constructed approximately equilaterally with parallel side areas (4, 5, 6, 7) to the centre and transverse axis, having an outer coil (11) located in the side areas (4, 5, 6, 7) of the annular sensor body (1) as the main coil and which surface-encloses at least one inner coil (12, 13, 14), at least one of the coils being connected as a transmitting coil and at least one further coil as a receiving coil,
**characterized in that**
- a compensating winding is present for the at least one receiving coil for compensating an electromagnetic field produced by the transmitting coil,
- the outer coil can be connected both as a transmitting and as a receiving coil,
- each of the inner coils (12, 13, 14) is located at least partly in the side areas (4, 5, 6, 7) of the annular sensor body (1) and
- the inner coils (12, 13, 14) jointly cover essentially the entire sensor surface.

2. Sensor according to claim 1, **characterized in that** at least two D-shaped coils (12) are present, which together cover essentially the entire surface of the sensor (1) and whose adjacent coil areas (13) are located in a connecting web (3) and that one D-shaped coil (12) is connected as a transmitting coil and the other D-shaped coil is connected as the receiving coil, particularly in alternating manner.

3. Sensor according to claim 1 or 2, **characterized in that** the inner coils have a D-shaped, 8-shaped or approximately circular structure.

4. Sensor according to one of the claims 1 to 3, **characterized in that** four mutually overlapping D-shaped coils are present, which in each case cover approximately half the sensor surface.

5. Sensor according to claim 3, **characterized in that** there is at least one 8-shaped coil (14) symmetrically to the centre or transverse axis with a coil crossing, particularly in a connecting web (3),or that one or two 8-shaped coils in crossed form are arranged approximately diagonally.

6. Sensor according to one of the claims 1 to 5, **characterized in that** the compensating winding is designed in such a way that a necessary quantity of the transmitter-side magnetic field acts in opposite and equal manner on the receiving coils and that the compensating winding has an equal number of windings flowed-through in the opposite way compared with the corresponding receiving coil and that the compensating winding on one side or split on both sides is arranged substantially congruently to the respective receiving coil.

7. Sensor according to one of the claims 1 to 6, **characterized in that** the compensating winding is constructed as a coil means positioned in series to the transmitting coil and looped in with respect to the respective receiving coil.

8. Sensor according to one of the claims 1 to 7, **characterized in that** the outer coil is connected as a receiving coil and one or more inner coils as transmitting coils and that the sensor has a square shape.

9. Sensor according to one of the claims 1 to 8, **characterized in that** the electronics required for operating the sensor are received by the longitudinal web (2) and/or the transverse web (3), that the web for receiving the electronics is widened and that the widening for receiving the electronics is constructed, more particularly in the central area and running in roughly parallel manner to the outer sides, with a tapering transition to the normal web width.

10. Sensor according to one of the claims 1 to 9, **characterized in that** there is a centrally positioned suspension device for the rotary holding of a support mechanism.

## Revendications

1. Capteur pour un détecteur de métal, avec un corps de capteur en forme de cadre, qui présente des barres de liaison (2, 3) le long de son axe médian et de son axe transversal, et qui est constitué de manière approximativement équilatérale, avec des parties latérales (4, 5, 6, 7) parallèles à l'axe médian et à l'axe transversal,
avec une bobine extérieure (11) servant de bobine principale placée dans les parties latérales (4, 5, 6, 7) du corps (1) de capteur en forme de cadre, bobine qui enserre de manière surfacique au moins une bobine intérieure (12, 13, 14), au moins l'une des bobines étant montée en bobine émettrice et une autre bobine en bobine réceptrice,
***caractérisé***
***en ce qu'***un enroulement de compensation est présent pour la bobine réceptrice au nombre d'au moins une afin de compenser un champ électromagnétique produit par la bobine émettrice,
***en ce que*** la bobine extérieure peut être montée aussi bien en bobine émettrice qu'en bobine réceptrice,
***en ce que*** chacune des bobines intérieures (12, 13, 14) est placée au moins partiellement dans les parties latérales (4, 5, 6, 7) du corps (1) de capteur en forme de cadre, et
***en ce que*** les bobines intérieures (12, 13, 14) recouvrent en commun sensiblement toute la surface du capteur.

2. Capteur selon la Revendication 1, ***caractérisé en ce qu****'*au moins deux bobines (12) en forme de D sont présentes, qui recouvrent en commun sensiblement toute la surface du capteur (1) et dont les zones de bobine voisines (13) sont placées dans une barre de liaison (3), et
***en ce qu'***une bobine (12) en forme de D est montée en bobine émettrice, l'autre bobine en forme de D en bobine réceptrice, en particulier en alternance.

3. Capteur selon la Revendication 1 ou 2, ***caractérisé en ce que*** les bobines intérieures présentent une structure en forme de D, en forme de 8 ou approximativement circulaire.

4. Capteur selon l'une quelconque des Revendications 1 à 3, ***caractérisé en ce que*** quatre bobines en forme de D se chevauchant sont présentes, qui recouvrent chacune environ la moitié de la surface du capteur.

5. Capteur selon la Revendication 3, ***caractérisé en ce qu*'**au moins une bobine (14) en forme de 8 est présente symétriquement à l'axe médian ou à l'axe transversal avec un croisement de bobine, en particulier dans une barre de liaison (3), ou ***en ce qu*'**une ou deux bobines en forme de 8 sont présentes, disposées approximativement en diagonale et croisées en elles.

6. Capteur selon l'une quelconque des Revendications 1 à 5, ***caractérisé en ce que*** l'enroulement de compensation est conçu de telle sorte qu'une part nécessaire du champ magnétique côté émetteur agisse en sens opposé directement sur les bobines réceptrices et ***en ce que*** l'enroulement de compensation présente un nombre d'enroulements traversés en sens inverse identique à celui de la bobine réceptrice correspondante, et ***en ce que*** l'enroulement de compensation est placé d'un côté ou séparément des deux côtés en grande partie en chevauchement avec la bobine réceptrice correspondante.

7. Capteur selon l'une quelconque des Revendications 1 à 6, ***caractérisé en ce que*** l'enroulement de compensation est conformé en dispositif à bobine placé en série avec la bobine émettrice et bouclé vers la bobine réceptrice correspondante.

8. Capteur selon l'une quelconque des Revendications 1 à 7, ***caractérisé en ce que*** la bobine extérieure est montée en bobine réceptrice et une ou plusieurs bobines intérieures en bobines émettrices, et ***en ce que*** le capteur est conformé de forme carrée.

9. Capteur selon l'une quelconque des Revendications 1 à 8, ***caractérisé en ce que*** l'électronique nécessaire au fonctionnement du capteur est logée dans la barre longitudinale (2) et/ou la barre transversale (3),
***en ce que*** la barre est élargie pour recevoir l'électronique, et
***en ce que*** l'élargissement pour recevoir l'électronique est formé en particulier dans la zone médiane et approximativement parallèlement aux côtés extérieurs, avec une transition progressive jusqu'à la largeur normale de la barre.

10. Capteur selon l'une quelconque des Revendications 1 à 9, ***caractérisé en ce qu*'**un dispositif de suspension placé au centre est prévu pour fixer de manière rotative un dispositif de port.
